(19) Europäisches Patentamt
European Patent Office
Office européen des brevets

(11) EP 0 562 730 B1

(12) EUROPEAN PATENT SPECIFICATION

(45) Date of publication and mention
of the grant of the patent:
23.10.1996 Bulletin 1996/43

(51) Int Cl.6: **C09D 133/12**, E04F 15/02,
C04B 41/48

(21) Application number: 93301701.4

(22) Date of filing: 05.03.1993

(54) **Non-removable, stain-resistant coatings**

Nichtentfernbare, fleckenbeständige Beschichtungen

Revêtements permanents résistants aux tâches

(84) Designated Contracting States:
AT BE CH DE DK ES FR GB GR IE IT LI LU MC NL
PT SE

(30) Priority: 27.03.1992 US 859174

(43) Date of publication of application:
29.09.1993 Bulletin 1993/39

(73) Proprietor: ROHM AND HAAS COMPANY
Philadelphia Pennsylvania 19105 (US)

(72) Inventors:
• Killam, Harrison Scott
Holland, Pennsylvania 18966 (US)
• Hartman, Karl John
Warminster, Pennsylvania 18974 (US)

(74) Representative: Angell, David Whilton et al
ROHM AND HAAS
European Operations Patent Department
Lennig House
2 Mason's Avenue
Croydon CR9 3NB (GB)

(56) References cited:
EP-A- 0 386 579          GB-A- 1 114 133

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention is directed to non-removable, stain-resistant coatings. In particular, the present invention is directed to aqueous coating compositions for sealing interior surfaces. More particularly, the invention is directed to coating compositions useful as sealers which are both permanent and stain resistant while retaining high gloss.

Interior, functional architectural surfaces, such as for example floors, walls, furniture, stairs and the like, are often coated with clear polymer films to provide both beauty and protection. On industrial flooring for example, sacrificial polymeric floor polishes beautify by providing high gloss and easy cleaning. They, also protect the flooring materials from the ravages of traffic. When a sacrificial polymeric floor polish has reached the end of its useful life, it is removed or stripped from the floor by the use of heavy, aggressive machinery and strong chemical cleaning or stripper solutions, which typically contain alkali and amines. To protect the flooring material from damage by these harsh stripping procedures, a permanent polymeric coating, hereinafter referred to as a sealer coating, is used under the sacrificial polymeric floor polish. The sealer coating permanently protects the flooring material because of its resistance to abrasion and to the chemicals used in removing or stripping the sacrificial polymeric floor polish. It also beautifies since the permanent sealer coating provides permanent gloss to the substrate, which is not removed when the overcoating of sacrificial polymeric floor polish is removed or stripped.

Because the sealer coating is inherently difficult to remove from the substrate, it cannot be restored, that is, removed and replaced, once it has been irreversibly damaged by traffic. Therefore, floor sealer coatings must be protected from traffic damage by the application of a second coating of a sacrificial polymeric floor polish. Clear sealer coatings which are intended to protect and beautify non-traffic surfaces, such as for example walls, are usually not protected with a sacrificial wear layer.

Sealer coating formulations must be aqueous based for resilient substrates, such as for example, vinyl, tilled vinyl, linoleum and the like because the solvents of solvent-borne formulations attack and destroy the resilient substrates during the application procedure. Sealer coating formulations for non-resilient substrates, such as for example concrete, wall board, bricks, pavers, and the like may be solvent based because the solvents will not easily damage these substrates. However, solvent based sealer coating formulations still pose flammability, toxicity, air pollution hazards as well as being higher in cost.

Sealer coatings need to resist attack by the alkali and amines of floor cleaning and stripping chemicals. Generally, sealer coatings are formulated with polymers that are hydrophobic and substantially non-functional. The hydrophobicity of the sealer coatings makes them susceptible to staining by common hydrophobic staining agents, such as asphalt, coal tar, shoe polish, oil-based dyes, anti-oxidants, oils, constituents of foodstuffs, such as mustard and juices, and cosmetics, as well as common soils. Moreover, the hydrophobic character of the sealer coating allows the staining agents to migrate through these barrier coatings into the even more hydrophobic substrate, staining it with no efficient means available for removal of the stain.

For example, U.S. Patent 3,466,223 discloses a hard, thin, stain-resistant coating for vinyl floor tiles where the coating contains a vinyl polymer and a plasticizer of 2,2,4-trimethylpentane-1,3-diol di-isobutyrate. The coating is permanent and is applied to the flooring material during its manufacture as a molten mixture impregnated onto the tile surface by high heat arid pressure. The compositions are not applied to existing structural surfaces which are already in place and may not be reapplied via normal janitorial maintenance of the coated substrate. U.S. Patent 4,519,174 discloses stain-resistant polymer-impregnated brick and tile articles, where the polymer has been polymerized *in situ* from polymerizable monomer and a drying oil or semi-drying oil. In addition, a mastic for forming stain resistant grout formed from sand and a polymeric binder is disclosed. Stain-resistant wall and floor structures formed from said composite articles and grout and the method of installing said structures are also disclosed. The starting materials of the coating must be applied and then polymerized before the article is placed in use as a construction material, since the polymerization process entails pretreatment of the article by vacuum, a prolonged purging under nitrogen, and subsequent initiation of the polymerization, such as by irradiation with an intense Cobalt 60 source. Further, the permanent coating is formed from monomers which polymerize after they impregnate the non-resilient matrix to a depth of 5/16 inches to 1 inch (0.794 cm to 2.54 cm). Italian Patent 782,519 discloses a stain-resistant thermoplastic film coating for vinyl wall covering. The film may be formed from nylon, polystyrene, polyethylene, polypropylene, styrene/acrylonitrile copolymers or polymethyl methacrylate. The covering is a preformed film that is applied as a solid laminate to the wall covering during the manufacturing process. It is not suitable for application to existing wall coverings or other architectural surfaces which are already in place. Japanese KOKAI 54-064532 discloses a stain-resistant aqueous coating composition for application to floors where the composition contains an addition polymer containing carboxylic functionality, wax, leveling agent, polyvalent metal complex salt, alkali soluble resin, plasticizer and water. The composition is not permanent and may be removed by conventional floor polish strippers. The composition is resistant to staining by conventional dry soils and traffic damage, such as black heel marks.

GB 1,114,133 discloses a coating composition which comprises an interpolymer of monomers comprising: methyl methacrylate and either 1-8% by weight of (meth)acrylic acid or 4-8% by weight of maleic or itaconic acid. Example 17 of GB 1,114,133 specifically discloses an interpolymer that contains 71% methyl methacrylate, 25% styrene and 4% methacrylic acid. The coating compositions disclosed in GB 1,114,133 exhibit hardness, durability, abrasion-resistance and gloss.

The present invention seeks to overcome the problems associated with the prior art. In particular, the present invention seeks to provide a sealer coating composition which can be applied during manufacture or preparation of the architectural substrate or to existing architectural substrates and may reapplied during normal janitorial maintenance, is permanent and stain-resistant, particularly to hydrophobic staining agents, and provides high gloss to the architectural substrate. It is also an object of the present invention to provide a method of permanently sealing an architectural substrate to provide improved stain resistance.

According to a first aspect of the present invention there is provided a sealer coating composition comprising a latex polymer which comprises, based on the total weight of the latex polymer, units derived from:

(a) 20% or less by weight of (meth)acrylate monomers whose homopolymers have a glass transition temperature less than 20°C; (b) 35% or less by weight styrene; (c) at least 35% by weight methyl methacrylate; and (d) from 1 to 15% by weight ethylenically unsaturated carboxylic acid; wherein the sum of components (a) and (b) does not exceed 45% by weight.

According to a second aspect of the present invention there is provided a method of permanently sealing a substrate comprising coating the substrate with a sealer coating composition of the first aspect of the present invention, preferably in an amount effective to coat completely the substrate.

Preferably, the latex polymer contains less than 15%, preferably less than 10%, by weight of units derived from (meth)acrylate monomers whose homopolymers have a glass transition temperature less than 20°C.

Preferably, the (meth)acrylate monomers are selected from the group consisting of methyl acrylate, ethyl acrylate, propyl acrylate, butyl acrylate, 2-ethylhexyl acrylate, decyl acrylate, isodecyl acrylate, decyl methacrylate and isodecyl methacrylate, preferably the (meth)acrylate monomers are selected from the group consisting of $C_1$-$C_4$ alkyl acrylates, more preferably the (meth)acrylate monomers are selected from the group consisting of $C_2$-$C_4$ alkyl acrylates.

Preferably, the latex polymer contains less than 25%, preferably less than 20%, by weight of units derived from styrene. Preferably it contains greater than 50%, preferably greater than 60%, by weight of units derived from methyl methacrylate.

Preferably, the latex polymer contains from 1% by weight to 10%, preferably 4% by weight to 8%, by weight of units derived from ethylenically unsaturated carboxylic acid.

Preferably, the ethylenically unsaturated carboxylic acid is selected from the group consisting of acrylic acid, methacrylic acid, itaconic acid, fumaric acid, maleic acid, maleic anhydride and crotonic acid, preferably the ethylenically unsaturated carboxylic acid is methacrylic acid.

Preferably, the substrate is a flooring substrate, preferably the flooring substrate is selected from the group consisting of vinyl,vinyl-asbestos, linoleum, wood, terrazzo, marble, brick and concrete.

Some of the advantages associated with the present invention include the provision of a sealer coating composition which can be applied during manufacture or preparation of the architectural substrate or to existing architectural substrates and may reapplied during normal janitorial maintenance, and which is permanent and stain-resistant, particularly to hydrophobic staining agents, and provides high gloss to the architectural substrate. Also, the present invention provides a method of permanently sealing an architectural substrate to provide improved stain resistance. Accordingly, we have discovered that the latex polymer compositions according to the present invention provide permanent sealer coatings with superior stain resistance, particularly to hydrophobic staining agents, without having a detrimental effect on the gloss. The sealer coatings may be applied during manufacture or preparation of the substrate or after the substrate is in place and may be reapplied during normal janitorial maintenance. The sealer coatings are applied as a thin layer on top of the substrate.

The present invention provides an aqueous coating which is both permanent and stain-resistant, particularly to hydrophobic staining agents, and provides gloss to substrates.

"Latex" as used herein refers to an aqueous dispersion of water-insoluble polymer which may be prepared by conventional polymerization techniques such as, for example, by emulsion polymerization techniques well known in the art.

"Glass transition temperature," or "$T_g$," as used herein means the glass transition temperature of a polymer as calculated by the Fox equation [*Bulletin of American Physics Society* 1 (3), page 123 (1956)]:

$$1/T_g = W_1/T_{g(1)} + W_2/T_{g(2)} + \dots + W_n/T_{g(n)}.$$

For a copolymer, $W_1$, $W_2$, and $W_n$ refer to the weight fractions of the individual monomers which make up the copolymer composition and $T_{g(1)}$, $T_{g(2)}$, and $T_{g(n)}$ refer to the glass transition temperatures (in degrees Kelvin) of the corresponding homopolymers.

As used herein, acrylate and methacrylate are referred to collectively as "(meth)acrylate".

A "substrate" as used herein may be any porous or non-porous surface used in flooring, walls, furniture and ceilings which include, but are not limited to, plastic, including vinyl, vinyl/asbestos, vinyl composition or filled vinyl, linoleum; resilient flooring composites (including those sometimes known as "no wax" flooring); wood; terrazzo; marble and other natural stones; brick; pavers; quarry tile; and concrete typically used in homes, offices, schools, and the like.

"Stain resistance" as used herein refers to a material's ability to prevent permanent discoloration by common household and industrial agents and which discolorations are not removable by conventional cleaning techniques or treatment with water- or organic solvent-based cleaning agents. The more severe staining agents include asphalt/coal tar, cordovan shoe polish, mustard, ketchup, coffee, Rit dye, Oil Brown dye, lipstick, tobacco and other types of smoke, neozone, chocolate syrup and the like. Asphalt/coal tar is the most severe of these staining agents. Resistance to staining by asphalt/coal tar is usually indicative of resistance to staining by the other less severe staining agents.

"Permanent" or "non-removable" as used herein refers to a coating's ability to resist removal by an alkaline, industrial strength polish stripping solution via scrubbing as described in American Society for Testing and Materials Standard Test Method D 1792-82.

The present invention therefore relates to permanent sealer coatings with superior stain resistance, particularly to hydrophobic staining agents, while maintaining high gloss. The sealer coatings may be applied during manufacture or preparation of the substrate or after the substrate is in place and may be reapplied during normal janitorial maintenance. The sealer coatings are applied as a thin layer on top of the substrate. This invention is also directed to a method to permanently seal a substrate to provide stain resistance without detrimentally affecting gloss.

Non-removability is a critical property for a sealer coating composition because it is necessary for a sealer to be able to withstand contact and rubbing with chemically aggressive household and industrial cleaning products used to clean soils from the substrate or to remove sacrificial floor polish. These cleaning agents typically are aqueous based, containing both nonionic and anionic surfactants, alkaline builders, such as for example, alkali metal hydroxide, carbonate, and bicarbonate salts, and softeners, such as for example metasilicate or pyrophosphate salts. They may optionally contain some organic solvents, such as for example pine oil, limonene, and the butyl, ethyl, or methyl ethers of ethylene glycol, propylene glycol, diethylene glycol, dipropylene glycol, and the like. The most aggressive cleaning formulations contain all of these types of inredients and also contain an amine, such as for example ammonia, monoethanol amine, diethanol amine, and the like.

The selection of the latex polymer compositions of the invention is critical to obtain both non-removability and stain resistance without having a detrimental effect on gloss. When any of these components are not present in the specified ranges, there is a loss either of non-removability or stain resistance or both.

The latex polymers useful in this invention are prepared with less than 20% by weight of (meth)acrylate monomers or mixture of monomers whose homopolymers have a glass transition temperature less than 20°C, based on the total weight of the latex polymer. When the latex polymer is prepared from more than 20% by weight, based on the total weight of the latex polymer, of (meth)acrylate monomers whose homopolymer have a glass transition temperature less than 20°C, the stain resistance of the sealer is unacceptably poor because of increased penetrability of the staining agents into the polymer. Latex polymers containing less than 15% by weight (meth)acrylate monomers whose homopolymer have a glass transition temperature less than 20°C are preferred. Latex polymers containing less than 10% by weight of (meth)acrylate monomers whose homopolymer have a glass transition temperature less than 20°C are most preferred.

Most preferably, the sealer coating composition comprises a latex polymer comprising units derived from based on the total weight of the latex polymer: (a) less than 10% but more than 1% by weight of (meth)acrylate monomers whose homopolymers have a glass transition temperature less than 20°C; (b) less than 20% but more than 1% by weight styrene; (c) greater than 60% but less than 100% by weight methyl methacrylate; and (d) from 4 to 8% by weight ethylenically unsaturated carboxylic acid.

(Meth)acrylate monomers whose homopolymer have a glass transition temperature less than 20°C useful in this invention include methyl acrylate, ethyl acrylate, propyl acrylate, butyl acrylate, 2-ethylhexyl acrylate, decyl acrylate, isodecyl acrylate, decyl methacrylate, isodecyl methacrylate, and the like. Of the (meth)acrylate monomers whose homopolymer have a glass transition temperature less than 20°C, $C_1$-$C_4$ alkyl acrylates are preferred with $C_2$-$C_4$ alkyl acrylates most preferred.

The latex polymers useful in this invention are prepared with less than about 35% by weight styrene, based on the total weight of the latex polymer. The styrene content provides gloss to the sealer coating composition and aids the sealer coating in resisting removal in normal janitorial maintenance procedures. Sealer coating compositions containing latex polymers having greater than 35% by weight styrene suffer from poor stain-resistance. Latex polymers containing less than 25% by weight styrene are preferred. Latex polymers containing less than 20% by weight styrene are most preferred.

The latex polymers useful in this invention are prepared with less than 45% by weight of the sum of (meth)acrylate monomers whose homopolymer have a glass transition temperature less than 20°C and styrene, components (a) and (b), based on the total weight of the latex polymer. Latex polymers having greater than 45% by weight of the sum of components (a) and (b) exhibit poor stain resistance.

The latex polymers useful in this invention are prepared with greater than 35% by weight methyl methacrylate, based on the total weight of latex polymer. Sealer coatings containing latex polymers formed from less than 35% by weight methyl methacrylate suffer from poor durability, particularly resistance to scuffing and abrasion. Latex polymers containing greater than 50% by weight methyl methacrylate are preferred. Latex polymers containing 60% by weight methyl methacrylate are most preferred.

The latex polymers useful in this invention contain a level of from 1% by weight to 15% by weight, based on the total weight of the latex polymer, of units derived from ethylenically unsaturated carboxylic acid monomers. Ethylenically unsaturated carboxylic acid monomers, as used herein, includes ethylenically unsaturated anhydride monomers which upon hydrolysis form carboxylic acid. Sealer coating compositions containing latex polymers formed from greater than 15% by weight ethylenically unsaturated carboxylic acid are not permanent and are easily removed by alkaline cleaning or stripping solutions. Sealer coating compositions containing latex polymer formed from less than 1% by weight ethylenically unsaturated carboxylic acid have unacceptable stain resistance. Latex polymers containing from 1% by weight to about 10% by weight of units derived from ethylenically unsaturated carboxylic acid are preferred. Latex polymer containing from about 4% by weight to about 8% by weight of units derived from ethylenically unsaturated carboxylic acid are most preferred.

Ethylenically unsaturated carboxylic acids useful in this invention include acrylic acid, methacrylic acid, itaconic acid, fumaric acid, maleic acid and maleic anhydride, crotonic acid. Latex polymer compositions containing units derived from methacrylic acid are preferred.

If the sum of the components of the latex composition does not equal 100% by weight, then the remainder may include units derived from any ethylenically unsaturated monomer or mixture of ethylenically unsaturated monomers not within the groups of monomers hereinbefore described as components (a), (b), (c) and (d), provided that the inclusion of the ethylenically unsaturated monomer or mixture of ethylenically unsaturated monomers results in a latex polymer which is alone film forming or film forming with the use of coalescent or plasticizer. Other ethylenically unsaturated monomers include (meth)acrylate monomers whose homopolymer have a glass transition temperature greater than about 20°C, acrylonitrile, butadiene and the like.

The latex polymers of this invention are useful at level of at least about 5% by weight of the final formulated sealer coating. Sealer coatings containing less than about 5% by weight do not form a complete coating or provide stain resistance. Preferably the final formulated sealer coating contains at least about 60% by weight of the latex polymer.

The latex polymers of this invention are useful at solids levels which will result in sealer formulations which will form a coherent coating on the substrate to be protected. Higher solids sealer formulations are required to form an integral coating on a highly porous surface, and lower solids sealer formulations will be sufficient for non-porous surfaces. A low solids sealer formulations may be applied to a highly porous substrate, but multiple coats may need to be applied to obtain good protection of the substrate. The latex polymers of this invention are typically prepared at solids levels greater than 5%. The maximum solids level is limited only in practice by the maximum usable viscosity of the formulation and the resulting leveling performance.

Sealer coatings may be formulated with a number of other conventional coating components in addition to the latex polymers of this invention. For example, Water may be used in the sealer formulation to control the solids and viscosity of the formulation. In addition, rheology modifiers and thickeners may also be added to control the rheology of the sealer formulation. Biocides or preservatives may be added to prevent the growth of bacteria and fungus in the wet formulation on prolonged storage. Heat and freeze/thaw stabilizers may be added to the wet sealer formulation to stablize the formulation against to repeated freezing and thawing cycles to maintain a usable viscosity after prolonged storage, sometimes at high temperatures. Because of the presence of surfactants in the formulation, it may be necessary to add an antifoaming or defoaming agent to the formulation to avoid foam marks in the dried sealer film. Coalescing and plasticizing solvents may be used in the formulation to obtain a coherent film. Waxes, such as poly(ethylene) and poly(propylene) emulsion polymers, may be used to provide improved abrasion, scuff and mar resistance to the sealer. Greater abrasion resistance is provided by the harder waxes, although high levels of these waxes may have a detrimental effect on the slip resistance of the sealer. To minimize costs, softer waxes may be used in conjunction with the harder waxes. In addition, wetting agents, leveling agents, pigments, colorants, optical brighteners and the like may be added to the sealer formulation.

The permanent, stain-resistant sealer coating compositions may be applied during manufacture or preparation of the substrate or after the substrate is in place and may be reapplied during normal janitorial maintenance. The permanent, stain-resistant sealer coating compositions of this invention may be applied to the substrates by conventional coating application methods, including string mop, spray, roller, brush, mohair and lambs wool applicators, saturated cloth wipe, flood coating techniques, and the like. The sealer coating compositions of this invention are also useful in applications requiring stain resistance, including, but not limited to, mastics, caulks and grouts.

The sealer coating compositions of this invention are effective in providing stain resistance to a coated substrate at a dry film thickness of at least about 0.05 mils (1.27 µm). Heavier coatings will provide higher gloss and improved scuff and abrasion resistance, but a coating thickness sufficient to provide a complete film over the surface of the substrate is sufficient to provide stain resistance.

The present invention will now be described by way of example only, in which the following abbreviations are used: g (grams); SLS (sodium lauryl sulfate); MA (methyl acrylate); BA (butyl acrylate); EA (ethyl acrylate); 2-EHA (2-ethylhexyl acrylate); MMA (methyl methacrylate); BMA (butyl methacrylate); IBMA (isobutyl methacrylate); HEMA (hydroxyethyl methacrylate); DMAPMA (dimethylaminopropyl methacrylamide); STY (styrene); AA (acrylic acid); MAA (methacrylic acid); ALMA (allyl methacrylate); FA (fumaric acid); AN (acrylonitrile).

## EXAMPLE 1. LATEX POLYMER PREPARATION

To a glass, round bottom 5 neck vessel equipped with a mechanical propeller stirrer, condenser, thermometer, inlet lines for feeding, and jacketed with heating and cooling coils, was charged 5600 g deionized water and 175 g sodium lauryl sulfate. The mixture was heated to 84-86°C while a slow stream of nitrogen was passed over the surface of the liquid. In a separate container, 3500 g deionized water was admixed with 315 g SLS, except where noted in Table 1.2.3. To this admixture the monomers as set forth in Table 1.1 were added to prepare the monomer mixture. A first catalyst solution was prepared from 158 g deionized water and 29.4 g ammonium persulfate. A second solution was prepared from 700 g deionized water and 14.7 g ammonium persulfate in a container equipped with variable rate feed capability to the vessel. When the reactor temperature stabilized at 84-86°C, the heat and nitrogen were turned off. The first catalyst solution was immediately added and stirred for one minute. The monomer mixture was slowly introduced to the vessel until an exotherm of about 5°C signaled the onset of polymerization. The feed rate was then increased to provide a monomer mixture feed time of 2 to 2.5 hours. Simultaneously, the addition of the second solution was begun with a feed time of 2 to 2.5 hours. During the reaction, the vessel was cooled to maintain the reaction temperature between 84-86°C. After the feeds were completed, the temperature was maintained at 84-86°C for an additional 15 minutes. The reactor was then cooled to 50-60°C. A solution of 7 g t-butyl-hydroperoxide dissolved in 35 g deionized water was then added to the reactor. After one minute, a solution of 3.5 g isoascorbic acid dissolved in 70 g deionized water was next added to the reactor. Cooling was continued to 45°-50° C. The pH of the emulsion was then adjusted to 7.5 by the slow addition of dilute ammonium hydroxide solution (5 g deionized water and 1 g of 28% ammonium hydroxide). The emulsion was then filtered through a 325 mesh screen to remove traces of grit. The solids of the emulsion product were adjusted to 38-40% with an appropriate charge of deionized water. The compositions of the latex polymers of the invention prepared according to the above method, and the compositions of the comparative latex compositions, are shown in Tables 1.2.1 -1.2.3.

Table 1.1

| Monomer | Monomer Mixtures (grams) | | | | |
|---|---|---|---|---|---|
| | 1 | 2 | 3 | 4 | 5 |
| EA | 700 | 700 | 700 | 700 | 700 |
| BA | - | - | - | - | - |
| MMA | 4791.5 | 4441.5 | 4091.5 | 3391.5 | 4091.5 |
| STY | 1050 | 1400 | 1750 | 2450 | 1750 |
| MAA | - | - | - | - | 441 |
| AA | 441 | 441 | 441 | 441 | - |
| ALMA | 17.5 | 17.5 | 17.5 | 17.5 | 17.5 |

| Monomer | Monomer Mixtures (grams) | | | | |
|---|---|---|---|---|---|
| | 6 | 7 | 8 | 9 | 10 |
| EA | 700 | - | - | - | - |
| BA | - | 700 | 700 | 700 | 700 |
| MMA | 4637.5 | 4791.5 | 4441.5 | 4091.5 | 4459 |
| STY | 1050 | 1050 | 1400 | 1750 | 1400 |
| MAA | - | - | - | - | - |

Table 1.1   (continued)

| Monomer | Monomer Mixtures (grams) | | | | |
|---|---|---|---|---|---|
| | 6 | 7 | 8 | 9 | 10 |
| AA | 560 | 441 | 441 | 441 | 441 |
| ALMA | 52.5 | 17.5 | 17.5 | 17.5 | - |

| Monomer | Monomer Mixtures (grams) | | | | |
|---|---|---|---|---|---|
| | 11 | 12 | 13 | 14 | 15 |
| EA | - | - | - | - | - |
| BA | 700 | 700 | 700 | 700 | 700 |
| MMA | 4109 | 4459 | 4620 | 4459 | 4459 |
| Sty | 1750 | 1400 | 1400 | 1400 | 1400 |
| MAA | - | - | - | 441 | 441 |
| AA | 441 | 441 | 280 | - | - |
| ALMA | - | - | - | - | - |

Table 1.2.1

| Latex Polymer | Components (weight %)** | | | | |
|---|---|---|---|---|---|
| | (a) | (b) | (c) | (d) | (a)+(b) |
| Comparative Polymer 1C | 25 BA* | 25 STY | 33.4 MMA* | 16 MAA * | 50* |
| Comparative Polymer 2C | 20 BA | 39 STY* | 25 MMA* | 15 MAA | 59* |
| Comparative Polymer 3C | 35 BA* | 40 STY* | 9 MMA* | 16 MAA | 75* |
| Comparative Polymer 4C | 23 BA* | 0 STY | 64.6 MMA | 12 MAA | 23 |
| Comparative Polymer 5C | 28 BA* | 0 STY | 60 MMA | 12 MAA | 28 |
| Comparative Polymer 6C | 45 BA* | 0 STY | 45 MMA | 10 MAA | 45 |
| Comparative Polymer 7C | 30 BA* | 40 STY* | 15.5 MMA* | 4.5 MAA 5AA | 70* |
| Comparative Polymer 8C | 25 BA* | 47 STY* | 20 MMA* | 8 MAA | 72 |
| Comparative Polymer 9C | 28 BA | 25 STY | 34 MMA* | 8 MAA | 53* |
| Comparative Polymer 10C | 5 BA* 55 BMA* | 32.7 STY 0 | MMA* | 7.5 MAA | 92.7* |
| Comparative Polymer 11C | 28 BA* | 12 STY | 52 MMA | 8 MAA | 40 |
| Comparative Polymer 12C | 30 2-EHA* | 40 STY* | 0 MMA* | 5 MAA | 70* |

*NOTE: Components having values outside the claims of the invention.

**NOTE:Component identifiers (a), (b), (c), (d) and (a) + (b) are used for comparison purposes with the compositions of the latex polymers of the invention.

7

Table 1.2.2

| Latex Polymer | Components (weight %)** | | | | |
|---|---|---|---|---|---|
| | (a) | (b) | (c) | (d) | (a)+(b) |
| Comparative Polymer 13C | 31.52-EHA* 20 IBMA* | 4 STY | 29 MMA* | 3 MAA | 55.5* |
| Comparative Polymer 14C | 57 EA* | 0 STY | 41.7 MMA | 1.3 MAA | 57* |
| Comparative Polymer 15C | 38 EA* | 0 STY | 61.1 MMA | 0.9 MAA* | 38 |
| Comparative Polymer 16C | 28 BA* | 0 STY | 62 MMA | 10 MAA | 28 |
| Comparative Polymer 17C | 9 BA | 20 STY | 53 MMA | 18 MAA* | 29 |
| Comparative Polymer 18C | 66 EA* | 0 STY | 32.7 MMA* | 1.3 MAA | 66* |
| Comparative Polymer 19C | 40 EA* | 0 STY | 52.6 MMA | 5 AA 1.9 FA | 40 |
| Comparative Polymer 20C | 40 EA* | 0 STY | 50 MMA | 10 AA | 40 |
| Comparative Polymer 21C | 40 EA* | 0 STY | 55 MMA | 5 AA | 40 |
| Comparative Polymer 22C | 40 EA* | 0 STY | 50 MMA | 10 MAA | 40 |
| Comparative Polymer 23C | 40 EA* | 0 STY | 53.1 MMA | 5 AA 1.9 FA | 40 |
| Comparative Polymer 24C | 30 BA* | 15 STY | 48.5 MMA | 6.3 AA | 45 |

*NOTE: Components having values outside the claims of the invention.

**NOTE:Component identifiers (a), (b), (c), (d) and (a) + (b) are used for comparison purposes with the compositions of the latex polymers of the invention

Table 1.2.3

| Latex Polymer | Components (weight %)** | | | | |
|---|---|---|---|---|---|
| | (a) | (b) | (c) | (d) | (a)+(b) |
| Polymer 1 | 10 EA | 15 STY | 68.4 MMA | 6.3 AA | 25 |
| Polymer 2 | 10 EA | 20 STY | 63.4 MMA | 6.3 AA | 30 |
| Polymer 3 | 10 EA | 25 STY | 58.4 MMA | 6.3 AA | 35 |
| Polymer 4 | 10 EA | 35 STY | 48.4 MMA | 6.3 AA | 45 |
| Polymer 5 | 10 EA | 25 STY | 58.4 MMA | 6.3 MAA | 35 |
| Polymer 6 | 10 EA | 15 STY | 66.25 MMA | 8 AA | 25 |
| Polymer 7 | 10 BA | 15 STY | 68.4 MMA | 6.3 AA | 25 |
| Polymer 8 | 10 BA | 20 STY | 63.4 MMA | 6.3 AA | 35 |
| Polymer 9 | 10 BA | 25 STY | 58.4 MMA | 6.3 AA | 35 |
| Polymer 10 | 10 BA | 20 STY | 63.7 MMA | 6.3 AA | 30 |
| Polymer 11 | 10 BA | 25 STY | 58.7 MMA | 6.3 AA | 35 |
| Polymer 12* | 10 BA | 20 STY | 63.7 MMA | 6.3 AA | 30 |

*NOTE: Lower SLS levels in polymerization process--
Polymer 12    210 g SLS
Polymer 14    225 g SLS
Polymer 15    140 g SLS

**NOTE:Component identifiers (a), (b), (c), (d) and (a) + (b) are used for comparison purposes with the compositions of the latex polymers of the invention

Table 1.2.3   (continued)

| Latex Polymer | Components (weight %)** | | | | |
|---|---|---|---|---|---|
| | (a) | (b) | (c) | (d) | (a)+(b) |
| Polymer 13 | 10 BA | 20 STY | 66 MMA | 4 AA | 30 |
| Polymer 14* | 10 BA | 20 STY | 63.7 MMA | 6.3 MAA | 30 |
| Polymer 15* | 10 BA | 20 STY | 63.7 MMA | 6.3 MAA | 30 |

*NOTE: Lower SLS levels in polymerization process--
Polymer 12      210 g SLS
Polymer 14      225 g SLS
Polymer 15      140 g SLS

**NOTE:Component identifiers (a), (b), (c), (d) and (a) + (b) are used for comparison purposes with the compositions of the latex polymers of the invention

The sealer formulation designated as "Comparative" have compositions which do not fall within the requirements of this invention. They each contain one or more components which are not within the range required for the sealer compositions of this invention. The sealer formulations containing components within the range of the sealer coating compositions of this invention exhibit very good or excellent resistance to staining by a strong hydrophobic staining agent while simultaneously producing a coating which is permanent (very good or excellent rating) and has high gloss (Example 4, shown hereinafter).

## EXAMPLE 2. PREPARATION OF SEALER FORMULATIONS

Sealer coatings containing each latex polymer were formulated so that the non-removability and stain resistance of each polymer composition could be evaluated. The formulations were prepared by mixing the listed ingredients, in grams, in Table 2.1 in an 8 ounce (226.8g) jar, fitted with a magnetic stirring bar, in the order listed. At the end of the additions, the mixture was stirred for an additional 15 minutes and equilibrated for 16 hours before testing.

| Material | Source |
|---|---|
| Kathon® CG/ICP biocide | Rohm and Haas Company |
| Fluorad® FC-120 fluorocarbon surfactant | 3M Company |
| Triton® X-35 nonionic surfactant | Union Carbide |
| Abex® 18 s anionic surfactant | Alcolac Corporation |
| SWS-211 silicone oil dispersion defoamer | Wacker Silicones |
| Resinall 802 resin | Resinall Corporation |
| Acrysol® 644 resin | Rohm and Haas Company |
| Epolene® E-43 N wax emulsion | Eastman Chemical Products |
| Epolene® E-20 N wax emulsion | Eastman Chemical Products |
| AC-540 N wax emulsion | Allied Chemical |
| AC-325 N wax emulsion | Allied Chemical |
| 371FP N wax emulsion | Hoechst-Celanese Corporation |

Table 2.1.1

| | Comparative Sealer Formulations (grams) | | | | |
|---|---|---|---|---|---|
| | 1 | 2 | 3 | 4 | 5 |
| Water | 44.1 | 44.04 | 29.00 | 45.10 | 34.52 |
| Kathon® CG/ICP (1.5%) biocide | 0.03 | 0.03 | 0.03 | 0.03 | 0.07 |
| Fluorad® FC-120 [1%] fluorocarbon surfactant | 1.01 | 0.68 | 0.90 | 0.75 | 0.50 |
| Stabilizer | | | | | |
| Triton® X-35 nonionic surfactant | - | - | - | - | - |
| Abex® 18 s anionic surfactant | 0.54 | 0.54 | - | 0.28 | - |
| SWS-211 silicone oil dispersion defoamer | 0.02 | 0.02 | 0.02 | 0.01 | 0.02 |

Table 2.1.1 (continued)

|  | Comparative Sealer Formulations (grams) | | | | |
|---|---|---|---|---|---|
| Coalescent | | | | | |
| Diethylene glycol n-butyl ether | - | - | - | - | - |
| Diethylene glycol methyl ether | 3.38 | 1.69 | - | 2.25 | - |
| Diethylene glycol ethyl ether | - | - | 4.75 | - | 7.00 |
| Dipropylene glycol methyl ether | 3.38 | 5.07 | 2.25 | 4.50 | - |
| Plasticizer | | | | | |
| 2,2,4-trimethylpentane-1,3-diol monoisobutyrate | - | - | 1.12 | - | - |
| Dibutyl phthalate | 1.69 | 1.69 | - | 2.21 | 1.70 |
| 2,2,4-trimethylpentane-1,3-diol di-isobutyrate | - | - | - | - | - |
| Tributoxy ethyl phosphate | 1.22 | 1.22 | 1.43 | 0.99 | 1.70 |
| Leveling Resin | | | | | |
| Resinall 802 [25%] | - | 2.03 | 4.50 | - | - |
| Acrysol® 644 (42%) | - | - | - | 1.99 | 2.98 |
| Latex polymer designation | 1C | 2C | 3C | 4C | 5C |
| Latex polymer level | 34.22 | 34.21 | 50.00 | 32.95 | 50.00 |
| Wax Emulsion | | | | | |
| Epolene® E-43 N (40%) | 4.86 | 6.35 | 2.78 | 4.17 | - |
| Epolene® E-20 N (35%) | 5.55 | - | - | - | - |
| AC-540 N (30%) | - | - | - | - | 12.5 |
| AC-325 N (35%) | - | 2.43 | 3.22 | - | - |
| 371FP N (35%) | - | - | - | 4.77 | - |

Table 2.1.2

|  | Comparative Sealer Formulations (grams) | | | | |
|---|---|---|---|---|---|
|  | 6 | 7 | 8 | 9 | 10 |
| Water | 31.24 | 30.14 | 29.04 | 32.36 | 42.26 |
| Kathon® CG/ICP (1.5%) biocide | 0.07 | 0.03 | 0.03 | 0.03 | 0.07 |
| Fluorad® FC-120 [1%] fluorocarbon surfactant | 0.28 | 0.56 | 1.00 | 1.00 | 1.00 |
| Stabilizer | | | | | |
| Triton® X-35 nonionic surfactant | - | - | - | - | - |
| Abex® 18 s anionic surfactant | - | - | 1.90 | - | - |
| SWS-211 silicone oil dispersion defoamer | 0.02 | 0.02 | 0.02 | 0.02 | 0.06 |
| Coalescent | | | | | |
| Diethylene glycol n-butyl ether | - | - | - | - | 8.00 |
| Diethylene glycol methyl ether | - | - | - | - | - |
| Diethylene glycol ethyl ether | 3.74 | 2.06 | 4.86 | 3.50 | - |
| Dipropylene glycol methyl ether | - | 2.06 | - | 4.50 | - |
| Plasticizer | | | | | |
| 2,2,4-trimethylpentane-1,3-diol monoisobutyrate | - | - | - | - | - |
| Dibutyl phthalate | - | 0.93 | - | - | 4.00 |
| 2,2,4-trimethylpentane-1,3-diol di-isobutyrate | 0.47 | - | 1.62 | - | - |
| Tributoxy ethyl phosphate | 0.75 | 0.93 | 1.62 | 1.70 | 0.50 |

Table 2.1.2 (continued)

|  | Comparative Sealer Formulations (grams) | | | | |
|---|---|---|---|---|---|
| **Leveling Resin** | | | | | |
| Resinall 802 (25%) | 4.68 | 4.67 | 10.00 | 5.00 | - |
| Acrysol® 644 (42%) | - | - | - | - | - |
| Latex polymer designation | 6C | 7C | 8C | 9C | 10C |
| Latex polymer level | 49.20 | 46.09 | 52.63 | 55.94 | 60.24 |
| **Wax Emulsion** | | | | | |
| Epolene® E-43 N (40%) | 5.26 | 5.84 | - | 4.30 | - |
| Epolene® E-20 N (35%) | - | - | - | - | - |
| AC-540 N (30%) | - | - | 8.33 | - | - |
| AC-325 N (35%) | 4.01 | 6.67 | - | 2.50 | - |
| 371FP N (35%) | - | - | - | - | - |

Table 2.1.3

|  | Comparative Sealer Formulations (grams) | | | | |
|---|---|---|---|---|---|
|  | 11 | 12 | 13 | 14 | 15 |
| Water | 33.20 | 37.41 | 48.10 | 54.9 | 61.00 |
| Kathon® CG/ICP (1.5%) biocide | 0.03 | 0.03 | 0.03 | 0.03 | 0.07 |
| Fluorad® FC-120 [1%] fluorocarbon surfactant | 0.69 | 1.00 | 1.00 | 1.10 | 1.00 |
| **Stabilizer** | | | | | |
| Triton® X-35 nonionic surfactant | - | - | - | - | - |
| Abex® 18 s anionic surfactant | - | - | - | - | - |
| SWS-211 silicone oil dispersion defoamer | 0.02 | 0.05 | 0.02 | 0.02 | 0.02 |
| **Coalescent** | | | | | |
| Diethylene glycol n-butyl ether | - | 7.06 | - | - | - |
| Diethylene glycol methyl ether | - | - | 3.00 | 3.00 | - |
| Diethylene glycol ethyl ether | 6.24 | - | - | - | 3.00 |
| Dipropylene glycol methyl ether | 0.55 | - | - | - | - |
| **Plasticizer** | | | | | |
| 2,2,4-trimethylpentane-1,3-diol monoisobutyrate | - | - | - | - | - |
| Dibutyl phthalate | - | 1.77 | - | - | - |
| 2,2,4-trimethylpentane-1,3-diol di-isobutyrate | - | - | - | - | - |
| Tributoxy ethyl phosphate | 1.53 | 0.44 | 1.00 | 0.60 | 0.50 |
| **Leveling Resin** | | | | | |
| Resinall 802 (25%) | - | - | - | - | - |
| Acrysol® 644 (42%) | 5.46 | - | - | - | - |
| Latex polymer designation | 11C | 12C | 13C | 14C | 15C |
| Latex polymer level | 43.04 | 53.19 | 46.90 | 40.40 | 36.00 |
| **Wax Emulsion** | | | | | |
| Epolene® E-43 N (40%) | 4.31 | - | - | - | - |
| Epolene® E-20 N (35%) | - | - | - | - | - |
| AC-540 N (30%) | - | - | 8.33 | - | - |
| AC-325 N (35%) | 4.92 | - | - | - | - |
| 371FP N (35%) | - | - | - | - | - |

Table 2.1.4

| | Comparative Sealer Formulations (grams) | | | | |
|---|---|---|---|---|---|
| | 16 | 17 | 18 | 19 | 20 |
| Water | 40.40 | 52.30 | 53.6 | 40.4 | 40.4 |
| Kathon® CG/ICP (1.5%) biocide | 0.03 | 0.03 | 0.03 | 0.03 | 0.03 |
| Fluorad® FC-120 [1%] fluorocarbon surfactant | 1.60 | 1.00 | 1.10 | 1.60 | 1.60 |
| Stabilizer | | | | | |
| Triton® X-35 nonionic surfactant | 0.52 | - | 0.52 | 0.52 | 0.52 |
| Abex® 18 s anionic surfactant | 0.52 | 2.00 | 0.52 | 0.52 | 0.52 |
| SWS-211 silicone oil dispersion defoamer | 0.03 | 0.02 | 0.02 | 0.03 | 0.03 |
| Coalescent | | | | | |
| Diethylene glycol n-butyl ether | 4.01 | - | 4.01 | 4.01 | 4.01 |
| Diethylene glycol methyl ether | 3.5 | - | 3.50 | 3.50 | 3.50 |
| Diethylene glycol ethyl ether | - | - | - | - | - |
| Dipropylene glycol methyl ether | - | 7.00 | - | - | - |
| Plasticizer | | | | | |
| 2,2,4-trimethylpentane-1,3-diol monoisobutyrate | 0.65 | - | 0.65 | 0.65 | 0.65 |
| Dibutyl phthalate | - | - | - | - | - |
| 2,2,4-trimethylpentane-1,3-diol di-isobutyrate | - | - | - | - | - |
| Tributoxy ethyl phosphate | 1.16 | 2.00 | 1.16 | 1.16 | 1.16 |
| Leveling Resin | | | | | |
| Resinall 802 (25%) | - | - | - | - | - |
| Acrysol® 644 (42%) | - | 1.00 | - | - | - |
| Latex polymer designation | 16C | 17C | 18C | 19C | 20C |
| Latex polymer level | 48.70 | 31.30 | 41.70 | 48.16 | 48.16 |
| Wax Emulsion | | | | | |
| Epolene® E-43 N (40%) | - | 0.50 | - | - | - |
| Epolene® E-20 N (35%) | - | - | - | - | - |
| AC-540 N (30%) | - | - | 8.33 | - | - |
| AC-325 N (35%) | - | 1.70 | - | - | - |
| 371FP N (35%) | - | - | - | - | - |

Table 2.1.5

| | Comparative Sealer Formulations (grams) | | | |
|---|---|---|---|---|
| | 21 | 22 | 23 | 24 |
| Water | 40.40 | 40.40 | 40.40 | 40.4 |
| Kathon® CG/ICP (1.5%) biocide | 0.03 | 0.03 | 0.03 | 0.03 |
| Fluorad® FC-120 [1%] fluorocarbon surfactant | 1.60 | 1.60 | 1.60 | 1.60 |
| Stabilizer | | | | |
| Triton® X-35 nonionic surfactant | 0.52 | 0.52 | 0.52 | 0.52 |
| Abex® 18 s anionic surfactant | -- | -- | -- | -- |
| SWS-211 silicone oil dispersion defoamer | 0.03 | 0.03 | 0.03 | 0.03 |
| Coalescent | | | | |
| Diethylene glycol n-butyl ether | 4.01 | 4.01 | 4.01 | 4.01 |

12

Table 2.1.5   (continued)

| | Comparative Sealer Formulations (grams) | | | |
|---|---|---|---|---|
| | 21 | 22 | 23 | 24 |
| **Coalescent** | | | | |
| Diethylene glycol methyl ether | 3.5 | 3.50 | 3.50 | 3.50 |
| Diethylene glycol ethyl ether | - | - | - | - |
| Dipropylene glycol methyl ether | - | - | - | - |
| **Plasticizer** | | | | |
| 2,2,4-trimethylpentane-1,3-diol monoisobutyrate | 0.65 | 0.65 | 0.65 | 0.65 |
| Dibutyl phthalate | - | - | - | - |
| 2,2,4-trimethylpentane-1,3-diol di-isobutyrate | - | - | - | - |
| Tributoxy ethyl phosphate | 1.16 | 1.16 | 1.16 | 1.16 |
| **Leveling Resin** | | | | |
| Resinall 802 (25%) | - | - | - | - |
| Acrysol® 644 (42%) | - | - | - | - |
| Latex polymer designation | 21C | 22C | 23C | 24C |
| Latex polymer level | 48.16 | 48.16 | 48.16 | 48.16 |
| **Wax Emulsion** | | | | |
| Epolene® E-43 N (40%) | - | - | - | - |
| Epolene® E-20 N (35%) | - | - | - | - |
| AC-540 N (30%) | - | - | - | - |
| AC-325 N (35%) | - | - | - | - |
| 371FP N (35%) | - | - | - | - |

Table 2.1.6

| | Sealer Formulations (grams) | | | | |
|---|---|---|---|---|---|
| | 1 | 2 | 3 | 4 | 5 |
| Water | 40.40 | 40.40 | 40.40 | 40.40 | 40.40 |
| Kathon® CG/ICP (1.5%) biocide | 0.03 | 0.03 | 0.03 | 0.03 | 0.03 |
| Fluorad® FC-120 [1%] fluorocarbon surfactant | 1.60 | 1.60 | 1.60 | 1.60 | 1.60 |
| **Stabilizer** | | | | | |
| Triton® X-35 nonionic surfactant | 0.50 | 0.50 | 0.50 | 0.50 | 0.50 |
| Abex® 18 s anionic surfactant | - | - | - | - | - |
| SWS-211 silicone oil dispersion defoamer | 0.03 | 0.03 | 0.03 | 0.03 | 0.03 |
| **Coalescent** | | | | | |
| Diethylene glycol n-butyl ether | 4.01 | 4.01 | 4.01 | 4.01 | 4.01 |
| Diethylene glycol methyl ether | 3.50 | 3.50 | 3.50 | 3.50 | 3.50 |
| Diethylene glycol ethyl ether | - | - | - | - | - |
| Dipropylene glycol methyl ether | - | - | - | - | - |
| **Plasticizer** | | | | | |
| 2,2,4-trimethylpentane-1,3-diol monoisobutyrate | 0.65 | 0.65 | 0.65 | 0.65 | 0.65 |
| Dibutyl phthalate | - | - | - | - | - |
| 2,2,4-trimethylpentane-1,3-diol di-isobutyrate | - | - | - | - | - |
| Tributoxy ethyl phosphate | 1.16 | 1.16 | 1.16 | 1.16 | 1.16 |

Table 2.1.6   (continued)

|  | Sealer Formulations (grams) | | | | |
|---|---|---|---|---|---|
|  | 1 | 2 | 3 | 4 | 5 |
| Plasticizer |  |  |  |  |  |
| <u>Leveling Resin</u> |  |  |  |  |  |
| Resinall 802 (25%) | - | - | - | - | - |
| Acrysol® 644 (42%) | - | - | - | - | - |
| Latex polymer designation | 1 | 2 | 3 | 4 | 5 |
| Latex polymer level | 48.16 | 48.16 | 48.16 | 48.16 | 48.16 |
| <u>Wax Emulsion</u> |  |  |  |  |  |
| Epolene® E-43 N (40%) | - | - | - | - | - |
| Epolene® E-20 N (35%) | - | - | - | - | - |
| AC-540 N (30%) | - | - | - | - | - |
| AC-325 N (35%) | - | - | - | - | - |
| 371FP N (35%) | - | - | - | - | - |

Table 2.1.7

|  | Sealer Formulations (grams) | | | | |
|---|---|---|---|---|---|
|  | 6 | 7 | 8 | 9 | 10 |
| Water | 40.40 | 40.40 | 40.40 | 40.40 | 40.40 |
| Kathon® CG/ICP (1.5%) biocide | 0.03 | 0.03 | 0.03 | 0.03 | 0.03 |
| Fluorad® FC-120 [1%] fluorocarbon surfactant | 1.60 | 1.60 | 1.60 | 1.60 | 1.60 |
| Stabilizer |  |  |  |  |  |
| Triton® X-35 nonionic surfactant | 0.50 | 0.50 | 0.50 | 0.50 | 0.50 |
| Abex® 18 s anionic surfactant | -- | -- | -- | -- | -- |
| SWS-211 silicone oil dispersion defoamer | 0.03 | 0.03 | 0.03 | 0.03 | 0.03 |
| Coalescent |  |  |  |  |  |
| Diethylene glycol n-butyl ether | 4.01 | 4.01 | 4.01 | 4.01 | 4.01 |
| Diethylene glycol methyl ether | 3.50 | 3.50 | 3.50 | 3.50 | 3.50 |
| Diethylene glycol ethyl ether | - | - | - | - | - |
| Dipropylene glycol methyl ether | - | - | - | - | - |
| Plasticizer |  |  |  |  |  |
| 2,2,4-trimethylpentane-1,3-diol monoisobutyrate | 0.65 | 0.65 | 0.65 | 0.65 | 0.65 |
| Dibutyl phthalate | - | - | - | - | - |
| 2,2,4-trimethylpentane-1,3-diol di-isobutyrate | - | - | - | - | - |
| Tributoxy ethyl phosphate | 1.16 | 1.16 | 1.16 | 1.16 | 1.16 |
| Leveling Resin |  |  |  |  |  |
| Resinall 802 (25%) | - | - | - | - | - |
| Acrysol® 644 (42%) | - | - | - | - | - |
| Latex polymer designation | 6 | 7 | 8 | 9 | 10 |
| Latex polymer level | 48.16 | 48.16 | 48.16 | 48.16 | 48.16 |
| Wax Emulsion |  |  |  |  |  |
| Epolene® E-43 N (40%) | - | - | - | - | - |
| Epolene® E-20 N (35%) | - | - | - | - | - |
| AC-540 N (30%) | - | - | - | - | - |

Table 2.1.7   (continued)

| | Sealer Formulations (grams) | | | | |
|---|---|---|---|---|---|
| | 6 | 7 | 8 | 9 | 10 |
| Wax Emulsion | | | | | |
| AC-325 N (35%) | - | - | - | - | - |
| 371FP N (35%) | - | - | - | - | - |

Table 2.1.8

| | Sealer Formulations (grams) | | | | |
|---|---|---|---|---|---|
| | 11 | 12 | 13 | 14 | 15 |
| Water | 40.40 | 40.40 | 40.40 | 40.40 | 40.40 |
| Kathon® CG/ICP (1.5%) biocide | 0.03 | 0.03 | 0.03 | 0.03 | 0.03 |
| Fluorad® FC-120 [1%] fluorocarbon surfactant | 1.60 | 1.60 | 1.60 | 1.60 | 1.60 |
| Stabilizer | | | | | |
| Triton® X-35 nonionic surfactant | 0.50 | 0.50 | 0.50 | 0.50 | 0.50 |
| Abex® 18 s anionic surfactant | -- | -- | -- | -- | -- |
| SWS-211 silicone oil dispersion defoamer | 0.03 | 0.03 | 0.03 | 0.03 | 0.03 |
| Coalescent | | | | | |
| Diethylene glycol n-butyl ether | 4.01 | 4.01 | 4.01 | 4.01 | 4.01 |
| Diethylene glycol methyl ether | 3.50 | 3.50 | 3.50 | 3.50 | 3.50 |
| Diethylene glycol ethyl ether | - | - | - | - | - |
| Dipropylene glycol methyl ether | - | - | - | - | - |
| Plasticizer | | | | | |
| 2,2,4-trimethylpentane-1,3-diol monoisobutyrate | 0.65 | 0.65 | 0.65 | 0.65 | 0.65 |
| Dibutyl phthalate | - | - | - | - | - |
| 2,2,4-trimethylpentane-1,3-diol di-isobutyrate | - | - | - | - | - |
| Tributoxy ethyl phosphate | 1.16 | 1.16 | 1.16 | 1.16 | 1.16 |
| Leveling Resin | | | | | |
| Resinall 802 (25%) | - | - | - | - | - |
| Acrysol® 644 (42%) | - | - | - | - | - |
| Latex polymer designation | 11 | 12 | 13 | 14 | 15 |
| Latex polymer level | 48.16 | 48.16 | 48.16 | 48.16 | 48.16 |
| Wax Emulsion | | | | | |
| Epolene® E-43 N (40%) | - | - | - | - | - |
| Epolene® E-20 N (35%) | - | - | - | - | - |
| AC-540 N (30%) | - | - | - | - | - |
| AC-325 N (35%) | - | - | - | - | - |
| 371FP N (35%) | - | - | - | - | - |

## EXAMPLE 3. PREPARATION OF TEST SPECIMENS

Two coats of the sealer formulations were applied to white vinyl tiles in accordance with Method B described in ASTM D 1436-82 ("Standard Methods for Application of Emulsion Floor Polishes to Substrates for Testing Purposes"). The sealers were applied at a spread rate of approximately 2000 square feet per gallon via a hand applicator. The horizontal test specimens were permitted to dry one hour between coats under ambient conditions of 16°-24°C and 20 to 80% relative humidity. After the second coat was applied the tiles were allowed to age for 16 to 24 hours before being submitted to further testing.

**EXAMPLE 4.APPLICATIONS TESTING**

**NONREMOVABILITY (PERMANENCE) TESTING**

To determine the non-removability (permanence) of the coating compositions, each sealer formulation, prepared according to Example 3, was evaluated according to the procedure set forth in ASTM D 1792-82 ("Standard Test Method for Long-Term Removability Properties of Emulsion Floor Polishes") using a Gardner straight-line washability apparatus. This test evaluates the relative ease of removal of dried films of water-emulsion floor finishes from common flooring substrates under accelerated conditions which correspond to extended aging in service. The stripping solution is a standard industrial strength alkaline cleaning solution, with ammonia added. The test specimens are rated for non-removability in accordance with the descriptions in Table 4.1. The results are reported in Table 4.3. The only acceptable ratings for non-removability are very good and excellent.

**STAIN RESISTANCE TESTING**

To determine the stain resistance of the sealer compositions, test specimens of each sealer formulation, prepared according to Example 3, were evaluated by applying a spot test of 1-2.5 of asphalt/coal tar staining agent (physical blend of 70 parts asphalt emulsion with 30 parts coal tar) to each coated tested specimen. The staining agent was alowed to remain on the coated surface of the test specimen for 30 minutes, then the test specimen was wiped with a dry cheesecloth swatch to remove as much of the staining agent as possible. The test specimen was then wiped with a cheesecloth swatch moistened with mineral spirits to remove all residues of the staining agent which had not penetrated into the film. The test specimen was then rinsed with water and wiped dry. The staining or discoloration which remained after this procedure was evaluated in accordance with the descriptions in Table 4.2. The results are reported in Table 4.3. The only acceptable stain resistance ratings are very good and excellent. The sealer coating compositions of this invention exhibit both non-removability and stain resistance.

Table 4.1

| Non-Removability Rating | Description |
| --- | --- |
| Excellent | no film damage damage |
| Very good | slight film damage, <5% removal |
| Good | film damage, 50% removal |
| Fair | film damage, 70% removal |
| Poor | complete removal of the film |

Table 4.2

| Stain Resistance Rating | Description |
| --- | --- |
| Excellent | no staining or discoloration |
| Very good | ghost of discoloration |
| Good | light, distinct stain |
| Fair | moderately deep stain |
| Poor | heavy stain, deep discoloration |

Table 4.3

| Sealer Formulation | Non-Removability Rating | Stain Resistance Rating |
| --- | --- | --- |
| Comparative 1 | poor | good/very good |
| Comparative 2 | poor | good |
| Comparative 3 | poor | poor |
| Comparative 4 | poor | good |
| Comparative 5 | good/very good | good |
| Comparative 6 | very good | poor |
| Comparative 7 | poor | poor |

Table 4.3   (continued)

| Sealer Formulation | Non-Removability Rating | Stain Resistance Rating |
|---|---|---|
| Comparative 8 | very good/excellent | poor |
| Comparative 9 | very good | poor |
| Comparative 10 | very good/excellent | fair |
| Comparative 11 | very good | poor |
| Comparative 12 | excellent | poor |
| Comparative 13 | very good/excellent | poor |
| Comparative 14 | very good/excellent | poor |
| Comparative 15 | excellent | poor |
| Comparative 16 | very good | fair/good |
| Comparative 17 | poor | excellent |
| Comparative 18 | excellent | poor |
| Comparative 19 | good/very good | excellent |
| Comparative 20 | poor | good |
| Comparative 21 | good | good |
| Comparative 22 | poor | excellent |
| Comparative 23 | good | good/very good |
| Comparative 24 | very good/excellent | poor |
| 1 | excellent | excellent |
| 2 | excellent | excellent |
| 3 | excellent | excellent |
| 4 | excellent | very good |
| 5 | excellent | very good |
| 6 | very good/excellent | excellent |
| 7 | excellent | excellent |
| 8 | very good/excellent | excellent |
| 9 | excellent | excellent |
| 10 | very good/excellent | excellent |
| 11 | excellent | excellent |
| 12 | very good/excellent | excellent |
| 13 | excellent | excellent |
| 14 | excellent | excellent |
| 15 | excellent | excellent |

The sealer formulations designated as "Comparative" have compositions which do not fall within the requirements of this invention. They each contain one or more components (see Tables 1.2.1-1.2.3, *supra*) which are not within the range required for the sealer compositions of this invention. The sealer formulations containing components within the range of the sealer coating compositions of this invention exhibit very good or excellent resistance to staining by a strong hydrophobic staining agent while simultaneously producing a coating which is permanent (very good or excellent rating) and has high gloss.

As shown, the selection of the latex polymer compositions of the invention is critical to obtain both non-removability and stain resistance without having a detrimental effect on gloss. When any of these components is not present in the specified ranges, there is a loss either of non-removability or stain resistance or both. This has been evidenced by Comparative Polymers 1C through 24C shown in the above illustrative Examples.

**Claims**

1.  A sealer coating composition comprising a latex polymer which comprises, based on the total weight of the latex polymer, units derived from:

   (a) 20% or less by weight of (meth)acrylate monomers whose homopolymers have a glass transition temperature less than 20°C;

(b) 35% or less by weight styrene;

(c) at least 35% by weight methyl methacrylate; and

(d) from 1 to 15% by weight ethylenically unsaturated carboxylic acid;

wherein the sum of components (a) and (b) does not exceed 45% by weight.

2. The sealer coating composition of claim 1 wherein the latex polymer contains less than 15%, preferably less than 10%, by weight of units derived from (meth)acrylate monomers whose homopolymers have a glass transition temperature less than 20°C.

3. The sealer coating composition of claim 1 or claim 2 wherein the (meth)acrylate monomers are selected from the group consisting of methyl acrylate, ethyl acrylate, propyl acrylate, butyl acrylate, 2-ethylhexyl acrylate, decyl acrylate, isodecyl acrylate, decyl methacrylate and isodecyl methacrylate, preferably the (meth)acrylate monomers are selected from the group consisting of $C_1$-$C_4$ alkyl acrylates, more preferably the (meth)acrylate monomers are selected from the group consisting of $C_2$-$C_4$ alkyl acrylates.

4. The sealer coating composition of of any one of the preceding claims wherein the latex polymer contains less than 25%, preferably less than 20%, by weight of units derived from styrene.

5. The sealer coating composition of any one of the preceding claims wherein the latex polymer contains greater than 50%, preferably greater than 60%, by weight of units derived from methyl methacrylate.

6. The sealer coating composition of any one of the preceding claims wherein the latex polymer contains from 1% by weight to 10%, preferably 4% by weight to 8%, by weight of units derived from ethylenically unsaturated carboxylic acid.

7. The sealer coating composition of any one of the preceding claims wherein the ethylenically unsaturated carboxylic acid is selected from the group consisting of acrylic acid, methacrylic acid, itaconic acid, fumaric acid, maleic acid, maleic anhydride and crotonic acid, preferably the ethylenically unsaturated carboxylic acid is methacrylic acid.

8. A method of permanently sealing a substrate comprising coating the substrate with a sealer coating composition as defined in any one of the preceding claims, preferably in an amount effective to coat completely the substrate.

9. The method of claim 8 wherein the substrate is a flooring substrate, preferably the flooring substrate is selected from the group consisting of vinyl,vinyl-asbestos, linoleum, wood, terrazzo, marble, brick and concrete.

**Patentansprüche**

1. Isolierschichtmasse mit einem Latexpolymer, das, bezogen auf das Gesamtgewicht des Latexpolymeren, Einheiten aufweist, die abgeleitet sind von:

(a) 20 Gew.-% oder weniger (Meth)acrylatmonomeren, deren Homopolymere eine Glasübergangstemperatur von weniger als 20°C haben;

(b) 35 Gew.-% oder weniger Styrol;

(c) mindestens 35 Gew.-% Methylmethacrylat; und

(d) von 1 bis 15 Gew.-% ethylenisch ungesättigte Carbonsäure;

wobei die Summe der Komponenten (a) und (b) 45 Gew-% nicht überschreitet.

2. Isolierschichtmasse nach Anspruch 1, bei der das Latexpolymer weniger als 15%, vorzugsweise weniger als 10%, bezogen auf das Gewicht, Einheiten enthält, die abgeleitet sind von (Meth)acrylat-monomeren, deren Homopolymere eine Glasübergangs-temperatur von weniger als 20°C haben.

3. Isolierschichtmasse nach Anspruch 1 oder 2, bei der die (Meth)acrylatmonomere ausgewählt sind aus der Gruppe bestehend aus Methylacrylat, Ethylacrylat, Propylacrylat, Butylacrylat, 2-Ethylhexylacrylat, Decylacrylat, Isodecylacrylat, Decylmethacrylat und Isodecylmethacrylat, wobei die (Meth)acrylatmonomere vorzugsweise ausgewählt sind aus der Gruppe bestehend aus $C_1$-$C_4$-Alkylacrylaten, und wobei in noch vorteilhafterer Weise die (Meth) acrylatmonomere ausgewählt sind aus der Gruppe bestehend aus $C_2$-$C_4$-Alkylacrylaten.

4. Isolierschichtmasse nach einem der vorstehenden Ansprüche, bei der das Latexpolymer weniger als 25%, vorzugsweise weniger als 20%, bezogen auf das Gewicht, Einheiten enthält, die von Styrol abgeleitet sind.

5. Isolierschichtmasse nach einem der vorstehenden Ansprüche, bei der das Latexpolymer mehr als 50%, vorzugsweise mehr als 60%, bezogen auf das Gewicht, Einheiten enthält, die von Methylmethacrylat abgeleitet sind.

6. Isolierschichtmasse nach einem der vorstehenden Ansprüche, bei der das Latexpolymer von 1 Gew.% bis 10 Gew.-%, vorzugsweise von 4 Gew.-% bis 8 Gew.-%, Einheiten enthält, die von ethylenisch ungesättigter Carbonsäure abgeleitet sind.

7. Isolierschichtmasse nach einem der vorstehenden Ansprüche, bei der die ethylenisch ungesättigte Carbonsäure ausgewählt ist aus der Gruppe, bestehend aus Acrylsäure, Methacrylsäure, Itaconsäure, Fumarsäure, Maleinsäure, Maleinsäureanhydrid und Crotonsäure, wobei die ethylenisch ungesättigte Carbonsäure vorzugsweise Methacrylsäure ist.

8. Verfahren zur dauerhaften Versiegelung eines Substrats, bei dem das Substrat mit einer Isolierschichtmasse der in einem der vorstehenden Ansprüchen angegebenen Definition versehen wird, vorzugsweise in einer Menge, die wirksam ist zur vollständigen Beschichtung des Substrats.

9. Verfahren nach Anspruch 8, bei dem das Substrat ein Fußbodensubstrat ist, wobei das Bodensubstrat vorzugsweise ausgewählt ist aus der Gruppe bestehend aus Vinyl, Vinyl-Asbest, Linoleum, Holz, Terrazzo, Marmor, Ziegel und Beton.

**Revendications**

1. Composition de revêtement d'étanchéité comprenant un polymère latex qui comprend, par rapport au poids total du polymère latex, des motifs dérivés de:

   (a) 20% ou moins, en poids, de monomères (méth)acrylate dont les homopolymères possèdent une température de transition vitreuse inférieure à 20°C;
   (b) 35% ou moins, en poids, de styrène;
   (c) au moins 35% en poids de méthacrylate de méthyle; et
   (d) de 1 à 15% en poids d'acide carboxylique à insaturation éthylénique;

   dans laquelle la somme des constituants (a) et (b) ne dépasse pas 45% en poids.

2. Composition de revêtement d'étanchéité selon la revendication 1, dans laquelle le polymère latex contient moins de 15%, de préférence moins de 10%, en poids, de motifs dérivés de monomères (méth)acrylate dont les homopolymères possèdent une température de transition vitreuse inférieure à 20°C.

3. Composition de revêtement d'étanchéité selon la revendication 1 ou 2, dans laquelle les monomères (méth)acrylate sont choisis dans le groupe constitué par l'acrylate de méthyle, l'acrylate d'éthyle, l'acrylate de propyle, l'acrylate de butyle, l'acrylate de 2-éthylhexyle, l'acrylate de décyle, l'acrylate d'isodécyle, le méthacrylate de décyle et le méthacrylate d'isodécyle, de préférence les monomères (méth)acrylate sont choisis dans le groupe constitué par les acrylates d'alkyle en $C_1$-$C_4$, mieux encore les monomères (méth)acrylate sont choisis dans le groupe constitué par les acrylates d'alkyle en $C_2$-$C_4$.

4. Composition de revêtement d'étanchéité selon l'une quelconque des revendications précédentes, dans laquelle le polymère latex contient moins de 25%, de préférence moins de 20%, en poids, de motifs dérivés du styrène.

5. Composition de revêtement d'étanchéité selon l'une quelconque des revendications précédentes, dans laquelle le polymère latex contient plus de 50%, de préférence plus de 60%, en poids, de motifs dérivés du méthacrylate de méthyle.

6. Composition de revêtement d'étanchéité selon l'une quelconque des revendications précédentes, dans laquelle le polymère latex contient de 1% en poids à 10%, de préférence de 4% en poids à 8%, en poids, de motifs dérivés d'acide carboxylique à insaturation éthylénique.

7. Composition de revêtement d'étanchéité selon l'une quelconque des revendications précédentes, dans laquelle l'acide carboxylique à insaturation éthylénique est choisi dans le groupe constitué par l'acide acrylique, l'acide méthacrylique, l'acide itaconique, l'acide fumarique, l'acide maléique, l'anhydride maléique et l'acide crotonique, de préférence l'acide carboxylique à insaturation éthylénique est l'acide méthacrylique.

8. Procédé pour étanchéifier un substrat de façon permanente, comprenant le revêtement du substrat avec une composition de revêtement d'étanchéité telle que définie dans l'une quelconque des revendications précédentes, de préférence en quantité efficace pour revêtir complètement le substrat.

9. Procédé selon la revendication 8, dans lequel le substrat est un substrat de plancher, de préférence le substrat de plancher est choisi dans le groupe constitué par le vinyle, la vinyl-amiante, le linoléum, le bois, le granito, le marbre, la brique et le béton.